(19)

**Europäisches Patentamt**

**European Patent Office**

**Office européen des brevets**

(11) **EP 3 855 844 A1**

(12) **EUROPEAN PATENT APPLICATION**

(43) Date of publication:
**28.07.2021 Bulletin 2021/30**

(21) Application number: **21153889.7**

(22) Date of filing: **27.01.2021**

(51) Int Cl.:
*H04W 72/04* (2009.01)  *H04W 72/12* (2009.01)
*H04W 24/02* (2009.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.01.2020 US 202062966126 P**
**31.12.2020 US 202017138957**

(71) Applicant: **Sterlite Technologies Limited Haryana 122002 (IN)**

(72) Inventors:
• **PAREKH, Shyam**
  **California, 94563 (US)**
• **TANG, Kevin**
  **California, 94568 (US)**
• **RAVINDRAN, Ravishankar**
  **California, 94582 (US)**

(74) Representative: **Hepworth Browne**
**15 St. Pauls Street**
**Leeds LS1 2JG (GB)**

(54) **METHOD AND APPARATUS FOR ALLOCATING BANDWIDTH IN A WIRELESS COMMUNICATION SYSTEM BASED ON UTILIZATION**

(57) A method and apparatus for dynamic allocation of radio resources in a wireless communication system (1000) is provided. The method includes receiving a plurality of traffic arrival information for a first time interval. The plurality of traffic arrival information includes a one or more traffic buffer demand, a one or more traffic arrival information for the first-time interval and a one or more average deficit value for the first-time interval. Further, the method includes, estimating a next average deficit for a second time interval based on the one or more average deficit value for the first-time interval. Furthermore, computing a forecast allocation based on the one or more traffic buffer demand, the one or more average deficit value for the first-time interval and the estimated next average deficit for the second time interval and allocating at least one physical resource block (PRB) based on the computed forecast allocation.

EP 3 855 844 A1

**Description**

BACKGROUND OF THE INVENTION

Field of the Invention.

The present disclosure relates to a wireless communication system, and more specifically relates to a method and an apparatus for allocating bandwidth in the wireless communication system based on utilization.

Description of Prior Art

The increase in demand of mobile customers for efficient and reliable connectivity (i.e., improved network) is continuously evolving and hence cellular operators (also referred as mobile network operators (MNOs) encompassing different radio access technologies (RATs)) desire to meet the mobile customers demand by ensuring uninterrupted services with quality and efficiency. On the other hand, in order to meet this desire, the cellular operators require a favourable balance among customer experience and satisfaction, network performance, and costs.

One way to improve performance and reduce their capital and operating costs is to share resources/bandwidth between the different RATs. That is, a same RAT is unlikely to use all of its resources all the time. Therefore, there is an opportunity for different RATs operating in a given geographical area to pool in some of their respective resources to achieve greater overall efficiency.

In general, Dynamic spectrum sharing (DSS) has been cited as one of the promising mechanism for managing the radio spectrum for coexisting systems (such as 3G, 4G and 5G). The goal of the DSS is to increase the performance of networks in the shared spectrum by providing a more efficient way of utilisation, which thereby outperforms fixed spectrum allocation (FSA). The DSS allows both 4G and 5G RATs to simultaneously operate within the same spectrum in time and space using a long term evolution (LTE) medium access controller (MAC) scheduler and a New Radio (NR) MAC scheduler. This requires mechanism to synchronize the LTE MAC scheduler and the NR MAC scheduler, so that they don't interfere with each other resource assignment over a time-frequency grid. Further, 3rd generation partnership project (3GPP) has extended an X2 protocol to support the DSS, where a MAC can exchange scheduling information to avoid interference. Further, the resources are allocated dynamically between the 4G and 5G technologies based on device distribution and capacity requirements. However, the DSS operates in either distributed fashion and/or in a centralized approach.

The DSS operating in distributed fashion within individual base stations (BSs) lacks wider view of the traffic dynamics of multiple cells, and fails to cover or work well with all deployment scenarios (e.g., non-co-located 4G/5G cells, or with UEs moving through multiple cells). That is, in the distributed fashion, the schedulers can estimate the future workload and propose the allocation of the radio resources. In order to avoid large delay during this allocation, one of the Medium access control (MAC) layer can be a master node. But this approach may incur multiple round-trip times (RTTs) and may not be fair. Thus, the actual latency depends on the latency on an X2 interface, which in turn depends on control unit/ distributed unit (CU/DU) deployment scenarios, e.g., edge vs center, co-sited vs non co-sited, etc.

In the centralized approach, a logically centralized function can be realized, that is provided with the expected current and future workload. In this, the logically centralized function decides the bandwidth and bit vector allocation. However, the latency in this approach can be comparable to that of the distributed approach, depending on the actual CU/DU deployment scenarios. Also, considering that the DSS is a vendor proprietary and built-in feature of the 4G/5G MAC schedulers at next generation Node-B (gNB)/ evolved Node-B (eNB) may lead to interoperability issues for the cellular operators who use the BSs from multiple vendors.

Thus, it is desired to address the above-mentioned disadvantages or other shortcomings or at least provide a useful alternative.

SUMMARY OF THE INVENTION

The principal object of the present invention is to provide a method for allocating bandwidth by a near real-time radio intelligent controller (Near-RT-RIC) in a wireless communication system based on utilization.

Another object of the present invention is to split bandwidth and assign radio resources using bit vectors between 4G and 5G in a centralized manner from the Near-RT-RIC considering dynamic workload assignment.

Another object of the present invention is to provide that the bandwidth allocation between 4G BS/5G BS is based on current buffer demand and forecasted average deficit and demand from the 4G/5G BS (base station), in unit of physical resources blocks (PRBs), for each $\Delta$ transmission time intervals (TTIs), with the forecasted average demand as a floor.

Another object of the present invention is to determine an average deficit over the allocated PRBs and the used PRBs over Δ transmission time interval (TTI) time period.

Another object of the present invention is to send, by a scheduler, to the Near-RT-RIC, a current buffered PRB demand and the average deficit every Δ transmission time interval (TTIs).

Another object of the present invention is to determine the forecast allocation of a bandwidth for each of a plurality of schedulers based on processed average deficit information, received PRB parameters and the allocated PRBs data.

Another object of the present invention is to provide a real time bandwidth allocation based on deficit in current allocation and deficit in historical allocation of PRBs using a smoothening process.

Accordingly, herein discloses a method and an apparatus for providing dynamic allocation of radio resources in a wireless communication system. The wireless communication system includes a radio access network (RAN) having a plurality of network nodes. The plurality of network nodes includes at least a type one network scheduler and a type two network scheduler. The method includes receiving at a first controller, from each of the type one network scheduler and the type two network scheduler, a plurality of traffic arrival information for a first time interval. The plurality of traffic arrival information includes a one or more traffic buffer demand, a one or more traffic arrival information for the first time interval and a one or more average deficit value for the first time interval. Further, the method includes estimating a next average deficit for a second time interval based on the one or more average deficit value for the first time interval from the type one network scheduler and the type two network scheduler. Furthermore, the method includes computing a forecast allocation based on the one or more traffic buffer demand, the one or more average deficit value for the first time interval and the estimated next average deficit for the second time interval for each of the type one network scheduler and the type two network scheduler and allocating at least a one physical resource block (PRB) based on the computed forecast allocation to each of the type one network scheduler and the type two network scheduler.

The method further includes receiving a dynamic spectrum sharing (DSS) policy configuration message by the first controller from a second controller. The DSS policy configuration message comprises a bandwidth allocation proportion between the type one network scheduler and the type two network scheduler. Additionally, the method includes allocating to each of the type one network scheduler and the type two network scheduler at least the one PRB based on the DSS policy configuration message and further dynamically updating the DSS policy configuration message based on a computed bandwidth demand at a predetermined time duration.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the spirit thereof, and the embodiments herein include all such modifications.

BRIEF DESCRIPTION OF DRAWING

The invention is illustrated in the accompanying drawings, throughout which like reference letters indicate corresponding parts in the various figures. In order to best describe the manner in which the above-described embodiments are implemented, as well as define other advantages and features of the disclosure, a more particular description is provided below and is illustrated in the appended drawings, understanding that these drawings depict only exemplary embodiments of the invention and are not therefore to be considered to be limiting in scope, the embodiments herein will be better understood from the following description with reference to the drawings, in which:

FIG. 1 illustrates an architecture of a wireless communication system.
FIG. 2 illustrates a radio intelligent controller (RIC) architecture of FIG. 1.
FIG. 3 illustrates various hardware elements in a near real-time radio access network intelligent controller (Near-RT-RIC).
FIG. 4 is a flow chart illustrating a method for allocating bandwidth in the wireless communication system based on utilization.

It should be noted that the accompanying figures are intended to present illustrations of few exemplary embodiments of the present disclosure. These figures are not intended to limit the scope of the present disclosure. It should also be noted that accompanying figures are not necessarily drawn to scale.

REFERENCE NUMERALS IN THE DRAWINGS

For a more complete understanding of the present invention parts, reference is now made to the following descriptions:

1000. wireless communication system
100. The Service Management and Orchestration (SMO) framework.
200. The second controller (Non-RT-RIC).
300. The first controller (Near-RT-RIC).
310. The resource configuration unit.
320. AI ML unit.
330. Communication unit.
340. Processor.
400. Core networks (EPC/NG core).
500. Radio access network (RAN).
600. The type one network scheduler.
800-1 and 800-2. User equipments (UEs).
O1. An interface.
E2. An interface.
A1. An interface.
X. Spectrum proportion.
Y. Spectrum proportion.
S400. Flow chart.
S402. An operation.
S404. An operation.
S406. An operation.
S408. An operation.

DETAILED DESCRIPTION OF THE INVENTION

The following detailed description is of the best currently contemplated modes of carrying out exemplary embodiments of the invention. The description is not to be taken in a limiting sense, but is made merely for the purpose of illustrating the general principles of the invention.

Reference in this specification to "one embodiment" or "an embodiment" means that a particular feature, structure, or characteristic described in connection with the embodiment is included in at least one embodiment of the present technology. The appearance of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

Reference will now be made in detail to selected embodiments of the present disclosure in conjunction with accompanying figures. The embodiments described herein are not intended to limit the scope of the disclosure, and the present disclosure should not be construed as limited to the embodiments described. This disclosure may be embodied in different forms without departing from the scope and spirit of the disclosure. It should be understood that the accompanying figures are intended and provided to illustrate embodiments of the disclosure described below and are not necessarily drawn to scale. In the drawings, like numbers refer to like elements throughout, and thicknesses and dimensions of some components may be exaggerated for providing better clarity and ease of understanding.

Moreover, although the following description contains many specifics for the purposes of illustration, anyone skilled in the art will appreciate that many variations and/or alterations to said details are within the scope of the present technology. Similarly, although many of the features of the present technology are described in terms of each other, or in conjunction with each other, one skilled in the art will appreciate that many of these features can be provided independently of other features. Accordingly, this description of the present technology is set forth without any loss of generality to, and without imposing limitations upon, the present technology.

It should be noted that the terms "first", "second", and the like, herein do not denote any order, ranking, quantity, or importance, but rather are used to distinguish one element from another. Further, the terms "a" and "an" herein do not denote a limitation of quantity, but rather denote the presence of at least one of the referenced item.

Conditional language used herein, such as, among others, "can," "may," "might," "may," "e.g.," and the like, unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without other input or prompting, whether these features, elements and/or steps are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

Standard Networking Terms and Abbreviation: RAN: A RAN may stand for radio access network. A radio access network (RAN) may be a part of a telecommunications system which may connect individual devices to other parts of a network through radio connections. A RAN may provide a connection of user equipment such as mobile phone or computer with the core network of the telecommunication systems. A RAN may be an essential part of access layer in the telecommunication systems which utilizes base stations (such as e node B, g node B) for establishing radio connections.

Wireless communication system: A wireless communication system may consist of various network components connected via wireless networks. The wireless networks may comprise of any wireless connectivity technology such as radio links, millimeter wave, etc. In this document, the wireless communication system may include one or more controller connected with radio access networks, which are further connected with a plurality of user equipments.

New RAN: A Radio Access Network which can support either NR/E-UTRA or both and have capabilities to interface with Next Generation Core Network (NG-CN). NG-C/U is a Control/User Plane interface toward NG-CN.

gNB: New Radio (NR) Base stations which have capability to interface with 5G Core named as NG-CN over NG-C/U (NG2/NG3) interface as well as 4G Core known as Evolved Packet Core (EPC) over S1-C/U interface.

LTE eNB: An LTE eNB is evolved eNodeB that can support connectivity to EPC as well as NG-CN.

Non-standalone NR: It is a 5G Network deployment configuration, where a gNB needs an LTE eNodeB as an anchor for control plane connectivity to 4G EPC or LTE eNB as anchor for control plane connectivity to NG-CN.

Standalone NR: It is a 5G Network deployment configuration where gNB does not need any assistance for connectivity to core Network, it can connect by its own to NG-CN over NG2 and NG3 interfaces.

Non-standalone E-UTRA: It is a 5G Network deployment configuration where the LTE eNB requires a gNB as anchor for control plane connectivity to NG-CN.

Standalone E-UTRA: It is a typical 4G network deployment where a 4G LTE eNB connects to EPC.

Xn Interface: It is a logical interface which interconnects the New RAN nodes i.e., it interconnects gNB to gNB and LTE eNB to gNB and vice versa.

The A1 interface may be defined as an interface between non-RT RIC and Near-RT RIC to enable policy-driven guidance of Near-RT RIC applications/functions, and support AI/ML workflow. The data packets which are communicated over the A1 interface may be called A1 messages. The E2 interface may be defined as an interface connecting the Near-RT RIC and one or more O-CU-CPs, one or more O-CU-UPs, and one or more O-DUs. The data packets which are communicated over E2 interface may be called E2 messages.

As per the O-RAN Alliance (O-RAN-WG1 OAM Architecture-v02.00), "the near real time RAN Intelligent Controller (near RT RIC) is a logical function that enables near-real-time control and optimization of O-RAN elements and resources via fine-grained data collection and actions over E2 interface. The Non-Real Time Radio Intelligent Controller (non RT RIC) is a logical function that enables non-real-time control and optimization of RAN elements and resources, AI/ML workflow including model training and updates, and policy based guidance of applications/features in near-RT RIC. It is a part of the Service Management & Orchestration Framework and communicates to the near-RT RIC using the A1 interface. Non-RT control functionality (> 1s) and near-Real Time (near-RT) control functions (< 1s) are decoupled in the RIC. Non-RT functions include service and policy management, RAN analytics and model-training for some of the near-RT RIC functionality, and non-RT RIC optimization. The xAPP is an independent software plug-in to the Near-RT RIC platform to provide functional extensibility to the RAN by third parties." The near-RT RIC controller can be provided different functionalities by using programmable modules as xAPPs, from different operators and vendors. The O1 interface is an interface between management entities in Service Management and Orchestration Framework and O-RAN managed elements, for operation and management, by which FCAPS management, Software management, File management shall be achieved. The xAPP is an independent software plug-in to the Near-RT RIC platform to provide functional extensibility to the RAN by third parties." The near-RT RIC controller can be provided different functionalities by using programmable modules as xAPPs, from different operators and vendors.

Further, a resource block may comprise of a plurality of resource elements (RE), each resource element being placed in individual subframe for a specific resource block (PRB). As a standard definition, the physical resource block (PRB) may be a smallest unit of frequency or bandwidth that can be allocated to a user. The physical resource block (or resource block) may typically 180 kHz wide in frequency and 1 slot long in time. In frequency, resource blocks may be either 12 x 15 kHz subcarriers or 24 x 7.5 kHz subcarriers wide. The number of subcarriers used per resource block for most channels and signals may be 12 subcarriers. Radio assignments in the telecommunication system may be achieved using allocation of physical resource blocks.

Accordingly, the present invention discloses a method and apparatus for allocating bandwidth in a wireless communication system based on utilization. Unlike conventional methods and system, the method can be used to accurately allocate the bandwidth to a long term evolution (LTE) system and a New Radio system on the basis of splitting bandwidth and assigning radio resources between the LTE and the NR in a centralized manner from the RIC considering dynamic workload assignment without any interference between an LTE scheduler and a 5G scheduler during a resource assignment. The proposed invention can be used for real time bandwidth allocation based on deficit in current allocation and deficit in historical allocation of physical resources blocks.

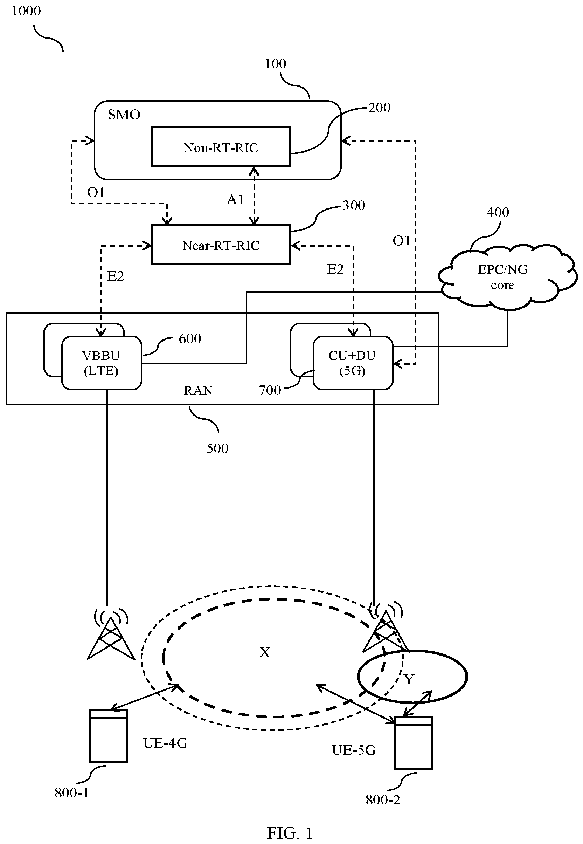

Referring now to the drawings, and more particularly to FIGS. 1 through 5, there are shown preferred embodiments.

FIG. 1 illustrates an architecture of a wireless communication system (1000). The wireless communication system (1000) may include at least one of an open-radio access network (O-RAN) architecture system, a fifth generation communication system, a long term evolution (LTE) communication system, a universal mobile telecommunications service (UMTS) communication system and a GERAN/GSM (GSM EDGE radio access network/global system for mobile communications) communication system.

In an implementation, the wireless communication system (1000) is the open-radio access network (O-RAN) architecture system. The wireless communication system (1000) is an evolved version of prior radio access networks, makes the prior radio access networks more open and smarter than previous generations. The wireless communication system (1000) provides real-time analytics that drive embedded machine learning systems and artificial intelligence back end modules to empower network intelligence. Further, the wireless communication system (1000) includes virtualized network elements with open and standardized interfaces. The open interfaces are essential to enable smaller vendors and operators to quickly introduce their own services, or enables operators to customize the network to suit their own unique needs. Open interfaces also enable multivendor deployments, enabling a more competitive and vibrant supplier ecosystem. Similarly, open source software and hardware reference designs enable faster, more democratic and permission-less innovation.

Further, the wireless communication system (1000) introduces a self-driving network by utilizing new learning based technologies to automate operational network functions. These learning based technologies make the wireless communication system intelligent. Embedded intelligence, applied at both component and network levels, enables dynamic local radio resource allocation and optimizes network wide efficiency. In combination with O-RAN's open interfaces, AI-optimized closed-loop automation is a new era for network operations.

The wireless communication system (1000) includes a service management and orchestration (SMO) framework (100), a non-real-time radio access network intelligent controller (Non-RT-RIC) (200), a near real-time radio access network intelligent controller (Near-RT-RIC) (300) and a plurality of components. The plurality of components may be a radio access network (RAN) (500) comprising a plurality of network nodes such as at least a type one network scheduler (600) and a type two network scheduler (700). The plurality of components is at least one of disaggregated, reprogrammable and vendor independent. The Near-RT-RIC is a first controller (300) and comprises vendor independent APIs (Application programming interfaces) and the Non-RT-RIC is a second controller (200). The Near-RT-RIC may synonymously be called as the first controller (300) and the Non-RT-RIC may synonymously be called as the second controller (200). The network scheduler may be defined as a component of RAN which is connected to user equipments at one side and one or more controllers at the other side. The network scheduler may play an important aspect in scheduling the radio resources or resource blocks from the controller. It may enable a base station (such as e node B and g node B) to decide which user equipments (UEs) should be given resources (or resource blocks), how much resource should be given to send or receive data. A network scheduler may govern the scheduling process at per subframe basis i.e. scheduling resources at every 1 mili second. The network scheduler may perform scheduling for a 4G network as a 4G scheduler, and for a 5G network as a 5G scheduler. In the document, 4G scheduler may be considered as a first network scheduler and 5G scheduler may be considered as a second network scheduler.

The Service Management and Orchestration (SMO) framework (100) is configured to provide SMO functions/services such as data collection and provisioning services of the RAN (500). As per O-RAN Alliance (O-RAN-WG1 OAM Architecture-v02.00), the SMO can be defined as "Service Management and Orchestration Framework is responsible for the management and orchestration of the managed elements under its span of control. The framework can for example be a third-party Network Management System (NMS) or orchestration platform. Service Management and Orchestration Framework must provide an integration fabric and data services for the managed functions. The integration fabric enables interoperation and communication between managed functions within the O-RAN domain. Data services provide efficient data collection, storage and movement capabilities for the managed functions. In order to implement multiple OAM architecture options together with RAN service modeling, the modeling of different OAM deployment options and OAM services (integration fabric etc.) must be supported by SMO". The RAN (500), herein, may be an O-RAN node operating in the O-RAN computing architecture (1000). The RAN (500) may implement single radio access technology (RAT) or multiple RATs. The data collection of the SMO framework may include, for example, data related to a bandwidth of plurality of network nodes or network schedulers (type one network scheduler (600) and type two network scheduler (700)) and user equipments (UEs) (800-1 and 800-2) connected to the type one network scheduler (600) and the type two network scheduler (700), respectively of the RAN (500).

The UEs (800-1 and 800-2) may be wireless devices e.g., mobile terminals, wireless terminals, terminals, and/or Mobile Stations (MS). The wireless devices may be, for example, portable, hand-held, computer-comprised, or vehicle-mounted mobile devices, enabled to communicate voice and/or data, via the RAN, with another entity, such as another terminal or a server. The UEs (800-1 and 800-2) are enabled to communicate wirelessly in a cellular communications network or wireless communication system. The communication may be performed e.g., between the UEs (800-1 and 800-2) between each UE 800-1/800-2 and the server via the RAN (500), and possibly one or more core networks (EPC/NG core) (400) comprised within telecommunication network. The UEs (800-1 and 800-2) may be a smart phone, a laptop, a desktop, smart watch or the like.

The telecommunication network may be divided into cell areas, each cell area being served by the the type one network scheduler (600) and/or the type two network scheduler (700). The type one network scheduler (600) and/or the type two network scheduler (700) may include, for example, an access node such as a Base Station (BS), e.g., a Radio Base Station (RBS), also referred to as e.g., evolved Node B ("eNB"),"eNodeB","NodeB","B node", gNB, or BTS (Base Transceiver Station), depending on the technology and terminology used. For example, the type one network scheduler (600) may be eNB, herein, that supports 4G/Long term evolution (LTE) RAT and the type two network scheduler (700) may be gNB, herein, that supports 5G/NR RAT or vice-versa. In other words, the type one network scheduler (600) may be a 4G scheduler, eNB and the type two network scheduler (700) may be a 5G scheduler, gNB.

In a scenario such as in the present invention, where RAN (500) is utilized to support both the type one network scheduler (600) and the type two network scheduler (700), then a challenge and important issues confronting the telecom operators/mobile operators is network interoperability and radio resource/spectrum sharing. Hence, the present invention is focussed towards providing an optimal solution towards the latter issue of the radio resource/spectrum sharing between the plurality of network nodes or network schedulers (such as the type one network scheduler (600) and the type two network scheduler (700)) supporting different RATs (4G and 5G).

Referring back to the SMO (100), which includes the non-real-time-radio access network intelligent controller (Non-RT-RIC, i.e. the second controller) (200) that may be configured to support intelligent RAN optimization in non-real-time. Further, the second controller (Non-RT-RIC) (200) may be configured to leverage the SMO services. As described earlier, that the focus of the present invention is to provide efficient/enhanced spectrum allocation which is achieved by the intellectualization offered by the near real-time radio access network intelligent controller ((nRT RIC) or (Near-RT-RIC)) i.e. the first controller (300). The first controller (Near-RT-RIC) (300) has the characteristic of intellectualization that can utilize artificial intelligence (AI)/ Machine learning (ML) technology to carry out services such as prediction, reasoning and the like.

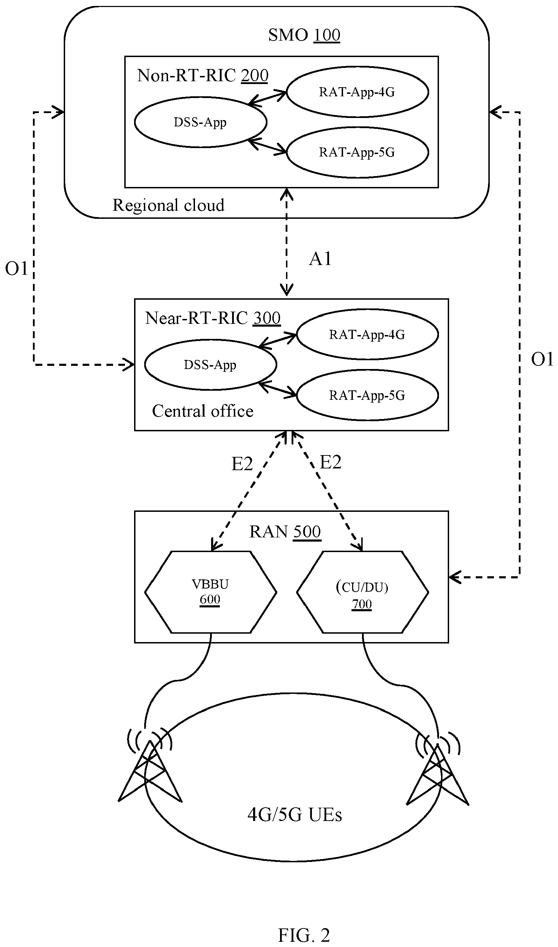

One example of spectrum sharing can be dynamic spectrum sharing (DSS) that may be implemented at both the second controller i.e. Non-RT-RIC (200) and the first controller i.e. Near-RT-RIC (300), as shown in FIG. 2. The DSS, herein, is considered is an example, as such other spectrum sharing mechanism(s) may be implemented in accordance with the present invention. Hereinafter, the term "second controller" is referred to as "Non-RT-RIC" and the term "first controller" is referred to as "Near-RT-RIC".

Further, the Near-RT-RIC (300) may host xApps, for example, DSS-App that is configured to provide the spectrum proportion (X and Y, in FIG. 1) to be shared between the type one network scheduler (600) and the type two network scheduler (700) using RAT-App-5G and RAT-App-4G, respectively. The xApps (at the Near-RT-RIC (300) uses an "E2" interface to collect near real-time RAN (500) information and to provide value added services using these primitives, guided by the policies/configuration and the enrichment data provided by an "A1" interface from the xApps at the Non-RT RIC (200). An "O1" interface collects data for training in the Non-RT RIC (200) (integrated with SMO (100)).

Unlike conventional dynamic allocation of radio services, where the RAN (500) implements a local computational process for computing a proportion of the radio resources to be shared at each network node supporting different RAT, respectively. The present invention therefore implements a dynamic allocation of radio services using the wireless communication system (1000) by involving a plurality of components such as the non-real-time RAN intelligent controller, the near-real-time RAN intelligent controller, the plurality of network nodes and at least one interface such as E2, A1, O1 or the like. The plurality of components is at least one of disaggregated, reprogrammable and vendor independent and the near-real-time RAN controller comprises vendor independent application programming interfaces (APIs).

Further, one such advantage of using the dynamic allocation of radio resources in the wireless communication system (1000) is that dynamic allocation of radio resources can be processed using the intellectualization of the Near-RT-RIC (300), that can dynamically generate a vendor independent real time bandwidth allocation (unlike conventional/existing vendor proprietary limitation) between the type one network scheduler (600) and the type two network scheduler (700).

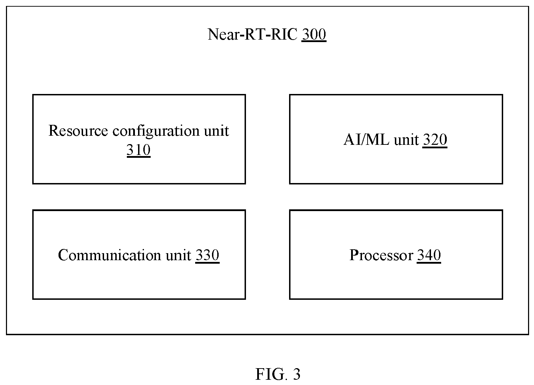

FIG. 3 illustrates various hardware elements in the Near-RT-RIC (300). The Near-RT-RIC (300) may include a resource configuration unit (310), an AI/ML unit (320), a communication unit (330) and a processor (340). The processor (340) is coupled with the resource configuration unit (310), the communication unit (330) and the AI/ML unit (320) and may be configured to process information shared among the hardware elements in the Near-RT-RIC i.e. the first controller (300).

The communication unit (330) may include a transmitter (not shown) and a receiver (not shown), an interface component(s) supporting plurality of interfaces (such as "A1", "O1", and any other supporting interface, represented as dotted lines in the FIG. 1). The communication unit (330) may be implemented, for example, in form of software layers that may be executed on a cloud computing platforms/systems. The communication unit (330) may be configured to communicate with the SMO (100) to avail the SMO services.

The interface component(s) of the communication unit (330) supports "E2" (represented as dotted lines in the FIG. 1) interface in addition to the plurality of interfaces (such as "A1" and "O1") supported by a communication unit of the Non-RT-RIC (200). The "E2" interface can be used to communicate the singling information/messages between the RAN (500) and the Near-RT-RIC (300).

In another aspect, the communication unit (330) may be configured to communicate [with] "or" receive the data collection and provisioning services of the RAN (500) from the SMO (100). The data collection, as described above, may include data (or key performance indicators (KPIs) related to the bandwidth of plurality of network nodes or network schedulers (the type one network scheduler (600) and the type two network scheduler (700)) and UEs (800-1 and 800-2) connected to type one network scheduler (600) and the type two network scheduler (700), respectively of the RAN (500). The key performance indicators of UEs and network nodes, received in periodic reports by the controllers, from the network scheduler, may denote current performance of UEs and the network nodes based on previous and current resource allocation by the network scheduler. With this information, controller may receive the information related to performance of the UE and understands what UE may require precisely. The KPI along with periodic reports basically may inform the controller about the current traffic, expected traffic data, performance data, and resource utilization which helps the controller in determining expected requirements by the UE and network scheduler for better performance and efficient utilization of radio resources.

The data (or key performance indicators (KPIs) related to the bandwidth may comprise a plurality of traffic arrival information for a first time interval. The traffic arrival information may include per TTI arrivals. The TTI may be defined as the time unit for the network scheduler (such as eNodeB or gNodeB) to schedule uplink and downlink data transmissions. The TTI may be a parameter related to encapsulation of data from higher layers into frames for transmission on the radio link layer. TTI may refer to the duration of a transmission on the radio link. The TTI may be related to the size of the data blocks passed from the higher network layers to the radio link layer. Further, the traffic parameters may include a current PRB buffer value. The current PRB buffer value may also be called current buffer demand. The current buffer value may be defined as the amount of traffic waiting to be transmitted in a current buffer. The initial buffered demand may be utilized by the RAN controller while determining the bandwidth demand for the network schedulers during the second time interval. Further, the first transmission time interval is a continuous transmission time intervals (TTIs). The communication unit (330) is configured to receive the plurality of traffic arrival information for the first time interval from each of the type one network scheduler (600) and the type two network scheduler (700). The plurality of traffic arrival information may include one or more traffic buffer demand, one or more traffic arrival information for the first-time interval and a one or more average deficit value for the first-time interval. The first time interval is a first one or more transmission time intervals (TTIs) for the one or more traffic arrival information and the one or more traffic buffer demand is one of more physical resource block (PRB) buffer demand. The first one or more transmission time intervals (TTIs) may be continuous TTIs. The plurality of traffic arrival information is a plurality of PRB parameters in units of physical resource block (PRB) per transmission time intervals (TTIs). In an aspect, the one or more average deficit value for the first time interval, from each of the type one network scheduler (600) and the type two network scheduler (700), is determined by subtracting at least one used PRBs from at least one allocated physical resource block (PRB) over a predetermined time duration. The one or more average deficit value for the first time interval, from each of the type one network scheduler (600) and the type two network scheduler (700), may be determined by subtracting at least one needed PRBs from the at least one allocation physical resource block (PRB) over a predetermined time duration. An average deficit may determine resource (PRB) utilization by the network scheduler by calculating how much PRBs are under used (or available) and how much PRBs are still required by the network scheduler, based on the current PRBs allocation. The average deficit value may be positive, zero and negative signifying that the current allocation of PRBs is more than what is required, exactly equal to what is required and less than what is required, by the network schedulers.

Further, the communication unit (330) may be configured to receive a dynamic spectrum sharing (DSS) policy configuration message for bandwidth allocation proportion from the second controller (200). The DSS policy configuration message may include a bandwidth allocation proportion between the type one network scheduler (600) and the type two network scheduler (700). The DSS policy configuration may be computed by a controller. The DSS policy configuration may be part of a non-real time radio intelligent controller (RIC), which may provide a DSS policy configuration message to the near real-time RIC for resource allocation to different network schedulers. The near real-time RIC may also provide different parameters to non real-time RIC for modifying the DSS policy. DSS policy may be dynamically updated based on periodic or real-time traffic requirements.

The allocated PRB as mentioned above is based on the DSS policy configuration message for the bandwidth allocation proportion to the type one network scheduler and the type two network scheduler.

The resource configuration unit (310) is communicatively coupled with the communication unit (330) and receives information from the communication unit (330). The resource configuration unit (310) estimates a next average deficit value for a second time interval from the type one network scheduler (600) and the type two network scheduler (700) based on the one or more average deficit value for the first time interval. Herein, the second time interval is a second one or more transmission time intervals (TTIs) for the one or more traffic arrival information and is an immediate next time interval of the first time interval. In other words, the one or more traffic arrival information for the second time interval is a next traffic arrival information. Thereby, the second time interval is the next one or more TTIs for the one or more traffic arrival information. The next one or more TTIs may be the next TTIs.

Estimation of the next average deficit value for the second time intervals or the next TTIs is important to identify the requirements of the type one network scheduler (600) and the type two network scheduler (700). The next traffic arrival information for the next TTIs may be estimated by at least one of: a geometric smoothing, a linear regression and a prediction analysis, of the received one or more traffic arrival information in unit of PRB per TTI. The received one or more traffic arrival information may be in unit of PRB per TTIs, which covers a possibility of receiving the traffic arrival information in unit of PRB per multiple TTIs. In one embodiment, the transmission time interval (TTI) and transmission time intervals (TTIs) may be used alternatively. Further the transmission time intervals (TTIs) may mean one or more TTIs. Similarly the buffer demand, and average deficit may be received in unit of PRB per TTI. In another aspect, the buffer demand and average deficits may be received in unit of PRB per multiple TTIs (PRB per TTIs). Alternatively, the next average deficit for the next TTIs is estimated by at least one of: the geometric smoothing, the linear regression and the prediction analysis, of the received one or more average deficit value, each from the type one network scheduler (600) and the type two network scheduler (700). The smoothening may include an exponential smoothening process.

In an implementation, such estimation may be done by using a regression equation:

$$D_s^*(n) = (1-\alpha)D_s^*(n-1) + \alpha D_s(n), \quad\ldots\ldots\ldots\ldots (1)$$

wherein the first time interval is the first one or more transmission time intervals (TTIs) for the one or more traffic arrival information, the second time interval is the next TTIs for the one or more traffic arrival information, $D_s^*(n)$ is the next deficit for next TTIs, the $D_s(n)$ is the one or more average deficit value, each from the type one network scheduler and the type two network scheduler, in units of physical resource block (PRB) per TTI, $\alpha$ is the parameter for smoothing having value in a range of 0 to 1, and $D_s^*(0) = D_s(0)$. The above regression equation may show calculation of future forecast of average deficit for the second transmission time intervals (next TTIs), signifying the predicted average deficit, which may be used to understand the behavior of the network schedulers, in terms of PRB requirements.

Based on the one or more traffic buffer demand, the one or more average deficit value for the first time interval and the estimated next average deficit for the second time interval (from equation 1), the resource configuration unit (310) computes a forecast allocation for each of the type one network scheduler (600) and the type two network scheduler (700). The forecast allocation may be computed by: $X_s(n) = \text{Max}\{ R_s(n) + D_s(n), R_S^*(n) \}$, where $R_S^*(n) = \beta R_S^*(n-1) + (1-\beta)R_s(n)$, $R_S^*(0) = R_s(0)$ where $R_s(n)$ is the plurality of PRB parameters, $D_s(n)$ is the one or more average deficit value of PRB(s) per TTI and $\beta$ is a parameter for smoothing. The forecast allocation may predict the PRB allocation which will be required by the network schedulers in next transmission time intervals. The forecast allocation is calculated based on the traffic arrival information, estimated average deficit value, and allocated PRBs in previous TTIs or current TTIs. The forecast allocation may enable the near RT RIC to take intelligent decision in allocating the PRBs, for dynamically handling traffic in real time and optimizing resource allocation process.

Based on the computed forecast allocation, the resource configuration unit (310) allocates at least one physical resource block (PRB) to each of the type one network scheduler (600) and the type two network scheduler (700). In an example, the allocation of the at least one PRB to each of the type one network scheduler (600) and the type two network scheduler (700) is proportional to the computed forecast allocation. Additionally, the resource configuration unit (310) also allocates the at least one PRB based on the DSS policy configuration message. The allocation/assignment of the at least one physical resource block during the second time interval to each of the type one network scheduler (600) and the type two network scheduler (700) occurs in such a way that the at least one physical resource block during the second time interval are orthogonal to each other.

Further, the resource configuration unit (310) dynamically updates the DSS policy configuration message based on the computed bandwidth demand at a predetermined time duration.

The AI/ML unit (320) may be configured to implement machine learning/artificial intelligence technologies to generate and deploy machine learning models/prediction models to assist the resource configuration unit (310) for prediction of load/traffic requirement of the RAN (500). For example, in some aspects, the one or more traffic buffer demand, the one or more traffic arrival information for the first time interval and the one or more average deficit value for the first time interval, the DSS policy configuration message or the like may be transmitted to the resource configuration unit (310) as an input and the AI/ML unit (320) may assist the resource configuration unit (310) to identify the demand and to allocate bandwidth to the plurality of network nodes based on the demand. The AI/ML unit (320) may be configured to assist the resource configuration unit (310) in such a way that enhances the bandwidth allocation and/or to effectively manage the interoperability interference. Further, the AI/ML unit (320) may control the real time behaviour of the RAN (500) and may assist the resource configuration unit (310) to dynamically allocate the radio resources in the wireless communication system (1000) through a continuous sequence of allocations.

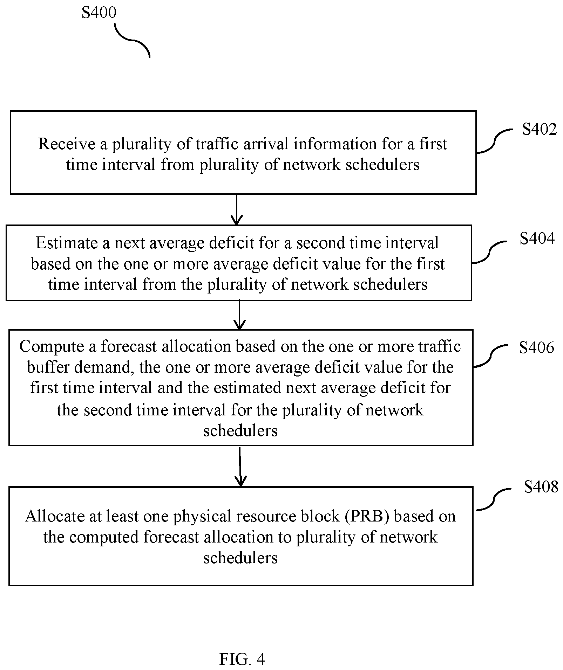

FIG. 4 is a flow chart (S400) illustrating a method for allocating bandwidth in the wireless communication system (1000) based on utilization. The operations (S402-S408) are performed by the first controller i.e., Near-RT-RIC (300).

At S402, the method includes receiving the plurality of traffic arrival information for the first time interval at the first controller (300) from each of the type one network scheduler (600) and the type two network scheduler (700). The plurality of traffic arrival information includes the one or more traffic buffer demand, the one or more traffic arrival information for the first time interval and the one or more average deficit value for the first time interval.

At S404, the method includes estimating the next average deficit for the second time interval based on the one or more average deficit value for the first time interval, from the type one network scheduler (600) and the type two network scheduler (700).

At S406, the method includes computing the forecast allocation for each of the type one network scheduler (600) and the type two network scheduler (700) based on the one or more traffic buffer demand, the one or more average deficit value for the first time interval and the estimated next average deficit for the second time interval.

At S408, the method includes allocating at least the one physical resource block (PRB) based on the computed forecast allocation, to each of the type one network scheduler (600) and the type two network scheduler (700).

The various actions, acts, blocks, steps, or the like in the flow chart (S400) may be performed in the order presented, in a different order or simultaneously. Further, in some embodiments, some of the actions, acts, blocks, steps, or the like may be omitted, added, modified, skipped, or the like without departing from the scope of the invention.

In one aspect of the invention, the method may predict how much of radio resource assignment will be required by the network scheduler in subsequent time intervals, in order to allocate the radio resources to the network schedulers in an optimized manner. The embodiments disclosed herein can be implemented using at least one software program running on at least one hardware device and performing network management functions to control the elements.

It will be apparent to those skilled in the art that other embodiments of the invention will be apparent to those skilled in the art from consideration of the specification and practice of the invention. While the foregoing written description of the invention enables one of ordinary skill to make and use what is considered presently to be the best mode thereof, those of ordinary skill will understand and appreciate the existence of variations, combinations, and equivalents of the specific embodiment, method, and examples herein. The invention should therefore not be limited by the above described embodiment, method, and examples, but by all embodiments and methods within the scope of the invention. It is intended that the specification and examples be considered as exemplary, with the true scope of the invention being indicated by the claims.

The methods and processes described herein may have fewer or additional steps or states and the steps or states may be performed in a different order. Not all steps or states need to be reached. The methods and processes described herein may be embodied in, and fully or partially automated via, software code modules executed by one or more general purpose computers. The code modules may be stored in any type of computer-readable medium or other computer storage device. Some or all of the methods may alternatively be embodied in whole or in part in specialized computer hardware.

The results of the disclosed methods may be stored in any type of computer data repository, such as relational databases and flat file systems that use volatile and/or nonvolatile memory (e.g., magnetic disk storage, optical storage, EEPROM and/or solid state RAM).

The various illustrative logical blocks, modules, routines, and algorithm steps described in connection with the embodiments disclosed herein can be implemented as electronic hardware, computer software, or combinations of both. To clearly illustrate this interchangeability of hardware and software, various illustrative components, blocks, modules, and steps have been described above generally in terms of their functionality. Whether such functionality is implemented as hardware or software depends upon the particular application and design constraints imposed on the overall system. The described functionality can be implemented in varying ways for each particular application, but such implementation decisions should not be interpreted as causing a departure from the scope of the disclosure.

Moreover, the various illustrative logical blocks and modules described in connection with the embodiments disclosed herein can be implemented or performed by a machine, such as a general purpose processor device, a digital signal processor (DSP), an application specific integrated circuit (ASIC), a field programmable gate array (FPGA) or other programmable logic device, discrete gate or transistor logic, discrete hardware components or any combination thereof designed to perform the functions described herein. A general purpose processor device can be a microprocessor, but in the alternative, the processor device can be a controller, microcontroller, or state machine, combinations of the same, or the like. A processor device can include electrical circuitry configured to process computer-executable instructions. In another embodiment, a processor device includes an FPGA or other programmable device that performs logic operations without processing computer-executable instructions. A processor device can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor device may also include primarily analog components. A computing environment can include any type of computer system, including, but not limited to, a computer system based on a microprocessor, a mainframe computer, a digital signal processor, a portable computing device, a device controller, or a computational engine within an appliance, to name a few.

The elements of a method, process, routine, or algorithm described in connection with the embodiments disclosed herein can be embodied directly in hardware, in a software module executed by a processor device, or in a combination of the two. A software module can reside in RAM memory, flash memory, ROM memory, EPROM memory, EEPROM memory, registers, hard disk, a removable disk, a CD-ROM, or any other form of a non-transitory computer-readable storage medium. An exemplary storage medium can be coupled to the processor device such that the processor device can read information from, and write information to, the storage medium. In the alternative, the storage medium can be integral to the processor device. The processor device and the storage medium can reside in an ASIC. The ASIC can reside in a user terminal. In the alternative, the processor device and the storage medium can reside as discrete components in a user terminal.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Although the present disclosure has been explained in relation to its preferred embodiment(s) as mentioned above, it is to be understood that many other possible modifications and variations can be made without departing from the spirit and scope of the inventive aspects of the present invention. It is, therefore, contemplated that the appended claim or claims will cover such modifications and variations that fall within the true scope of the invention.

The present invention also contemplates the embodiments set out in the following numbered clauses:

1. A method for providing dynamic allocation of radio resources in a wireless communication system (1000), the wireless communication system (1000) comprising a radio access network (RAN) (500), the RAN (500) comprising a plurality of network nodes, the plurality of network nodes comprising at least a type one network scheduler (600) and a type two network scheduler (700), the method comprising:

receiving, by a first controller (300) from each of the type one network scheduler (600) and the type two network scheduler (700), a plurality of traffic arrival information for a first time interval, wherein the plurality of traffic arrival information includes one or more traffic buffer demand, one or more traffic arrival information for the first time interval and one or more average deficit value for the first time interval;

estimating, from the type one network scheduler (600) and the type two network scheduler (700), a next average deficit for a second time interval based on the one or more average deficit value for the first time interval;

computing, for each of the type one network scheduler (600) and the type two network scheduler (700), a forecast allocation based on the one or more traffic buffer demand, the one or more average deficit value for the first time interval and the estimated next average deficit for the second time interval; and

allocating, to each of the type one network scheduler (600) and the type two network scheduler (700), at least one physical resource block (PRB) based on the computed forecast allocation.

2. The method of clause 1, further comprising:

receiving, by the first controller (300) from a second controller (200), a dynamic spectrum sharing (DSS) policy configuration message for bandwidth allocation proportion to the type one network scheduler (600) and the type two network scheduler (700); and

allocating, to each of the type one network scheduler (600) and the type two network scheduler (700), the at least one PRB based on the DSS policy configuration message.

3. The method of clause 1 or 2, further comprising:

receiving, by the first controller (300) from the second controller (200), the dynamic spectrum sharing (DSS) policy configuration message for bandwidth allocation proportion to the type one network scheduler (600) and the type two network scheduler (700);

allocating, to each of the type one network scheduler (600) and the type two network scheduler (700), the at least one PRB based on the DSS policy configuration message; and

dynamically updating the DSS policy configuration message based on the computed bandwidth demand at a predetermined time duration.

4. The method of any preceding clause, wherein at least one of:
the one or more traffic buffer demand is a one or more physical resource block (PRB) buffer demand, the first controller (300) is a near real-time radio access network intelligent controller, the second controller (200) is a non-real-time radio access network intelligent controller, the first time interval is at least a first one or more transmission time intervals (TTIs) for the one or more traffic arrival information, the second time interval is at least a second one or more transmission time intervals (TTIs), the type one network scheduler (600) is a 4G scheduler, the type two network scheduler (700) is a 5G scheduler, the plurality of traffic arrival information is a plurality of PRB parameters in units of physical resource block (PRB) per transmission time intervals (TTIs).

5. The method of any preceding clause, wherein the second time interval is an immediate next time interval of the first time interval.

6. The method of any preceding clause, wherein the one or more average deficit value for the first time interval, from each of the type one network scheduler (600) and the type two network scheduler (700), is determined by at least one of:

subtracting at least one used PRBs from at least one allocated physical resource block (PRB) over a predetermined time duration,

subtracting at least one needed PRBs from the at least one allocated physical resource block (PRB) over a predetermined time duration.

7. The method of any preceding clause, further comprising:

receiving, by the first controller (300) from the second controller (200), the dynamic spectrum sharing (DSS) policy configuration message for bandwidth allocation proportion to the type one network scheduler (600) and the type two network scheduler (700); and

allocating, to each of the type one network scheduler (600) and the type two network scheduler (700), the at least one PRB based on the DSS policy configuration message, wherein the one or more average deficit value for the first time interval, from each of the type one network scheduler (600) and the type two network scheduler (700), is determined by at least one of:

subtracting at least one used PRBs from at least one allocated physical resource block (PRB) over a predetermined time duration,

subtracting at least one needed PRBs from the at least one allocated physical resource block (PRB) over a predetermined time duration.

8. The method of any preceding clause, wherein the wireless communication system (1000) is an open-radio access network (O-RAN) architecture system, wherein the O-RAN architecture system includes the non-real-time RAN intelligent controller, the near real-time RAN intelligent controller and a plurality of components, wherein the plurality of components is at least one of: disaggregated, reprogrammable and vendor independent,
wherein the near real-time RAN intelligent controller comprises vendor independent APIs (Application programming interfaces),
wherein the near real-time RAN intelligent controller is the first controller.

9. The method of any preceding clause, wherein the at least one physical resource block during the second time interval, assigned to each of the type one network scheduler (600) and the type two network scheduler (700), are orthogonal to each other.

10. The method of any preceding clause, wherein the one or more traffic arrival information for the second time interval is a next traffic arrival information, the first time interval is the first one or more transmission time intervals(TTIs) for the one or more traffic arrival information, the second time interval is the next TTIs,
wherein the next traffic arrival information for the next TTIs is estimated by at least one of: a geometric smoothing, a linear regression and a prediction analysis, of the received one or more traffic arrival information in unit of PRB per TTIs.

11. The method of any preceding clause, wherein the one or more average deficit value, each for the first time interval and the second time interval, is at least one of: positive value, zero value and negative value.

12. The method of any preceding clause, further comprising:
estimating the next average deficit for the second time interval, from the type one network scheduler (600) and the type two network scheduler (700), using a regression equation:

$$D_s^*(n) = (1\text{-}\alpha)D_s^*(n-1) + \alpha D_s(n),$$

wherein the first time interval is at least a first one or more transmission time intervals (TTIs) for the one or more traffic arrival information, the second time interval is at least a second one or more transmission time intervals (TTIs), wherein the second one or more TTIs are the next TTIs for the one or more traffic arrival information,
wherein $D_s^*(n)$ is the next deficit for secondtime interval,
wherein the $D_s(n)$ is the one or more average deficit value, each from the type one network scheduler and the type two network scheduler, in units of physical resource block (PRB) per TTIs;

wherein $\alpha$ is the parameter for smoothing, wherein value of $\alpha$ lies in a range of 0 to 1, wherein $D_s^*(0) = D_s(0).$

13. The method of any preceding clause, wherein the first time interval is at least a first one or more transmission time intervals(TTIs) for the one or more traffic arrival information, the second time interval is at least a second one or more transmission time intervals (TTIs), wherein the second one or more TTIs are the next TTIs for the one or more traffic arrival information,
wherein the next average deficit for the next TTIs is estimated by at least one of: the geometric smoothing, the linear regression and the prediction analysis, of the received one or more average deficit value, each from the type one network scheduler (600) and the type two network scheduler (700).

14. The method of any preceding clause, further comprising:
computing, for each of the type one network scheduler (600) and the type two network scheduler (700), the forecast allocation based on the one or more traffic buffer demand per TTIs, the one or more average deficit value of PRB per TTIs, and the estimated next average deficit for the next TTIs by:

$$X_s(n) = Max\{ R_s(n) + D_s(n), R_s^*(n) \},$$

where

$$R_S^*(n) = \beta R_S^*(n-1) + (1-\beta)R_s(n), \; R_S^*(0) = R_s(0)$$

wherein the one or more traffic buffer demand is the one or more physical resource block (PRB) buffer demand, the first controller (300) is the near real-time RAN intelligent controller, wherein the first time interval is the first transmission time intervals (TTIs) for the one or more traffic arrival information, the second time interval is the next TTIs for the one or more traffic arrival information, the type one network scheduler (600) is the 4G scheduler, the type two network scheduler (700) is the 5G scheduler, the plurality of traffic arrival information is the plurality of PRB parameters in units of physical resource block (PRB) per transmission time intervals (TTIs),

wherein $R_s(n)$ is the plurality of PRB parameters,

wherein $D_s(n)$ is the one or more average deficit value of PRB(s) per TTIs,

wherein $\beta$ is a parameter for smoothing.

15. The method of any preceding clause, wherein the allocation of the at least one PRB to each of the type one network scheduler (600) and the type two network scheduler (700) is proportional to the computed forecast allocation.

16. The method of any preceding clause, wherein the wireless communication system (1000) includes at least one of: the O-RAN architecture system, a fifth generation communication system, an LTE (Long Term Evolution) communication system, a UMTS (Universal Mobile Telecommunications Service) communication system and a GERAN/GSM (GSM EDGE Radio Access Network/ Global System for Mobile Communications) communication system.

17. A first controller (300) for providing dynamic allocation of radio resources in a wireless communication system (1000), the wireless communication system (1000) comprising a radio access network (RAN) (500), the RAN (500) comprising a plurality of network nodes, the plurality of network nodes comprising at least a type one network scheduler (600) and a type two network scheduler (700), the first controller (300) is configured to:

receive, from each of the type one network scheduler (600) and the type two network scheduler (700), a plurality of traffic arrival information for a first time interval, wherein the plurality of traffic arrival information includes one or more traffic buffer demand, one or more traffic arrival information for the first time interval and one or more average deficit value for the first time interval;

estimate, from the type one network scheduler (600) and the type two network scheduler (700), a next average deficit for a second time interval based on the one or more average deficit value for the first time interval;

compute, for each of the type one network scheduler (600) and the type two network scheduler (700), a forecast allocation based on the one or more traffic buffer demand, the one or more average deficit value for the first time interval and the estimated next average deficit for the second time interval; and

allocate, to each of the type one network scheduler (600) and the type two network scheduler (700), at least one physical resource block (PRB) based on the computed forecast allocation.

18. The first controller (300) of clause 17 further configured to:

receive, from a second controller (200), a dynamic spectrum sharing (DSS) policy configuration message for bandwidth allocation proportion to the type one network scheduler (600) and the type two network scheduler (700); and

allocate, to each of the type one network scheduler (600) and the type two network scheduler (700), the at least one PRB based on the DSS policy configuration message.

19. The first controller (300) of clause 17 or 18 further configured to:

receive, from the second controller (200), the dynamic spectrum sharing (DSS) policy configuration message for bandwidth allocation proportion to the type one network scheduler (600) and the type two network scheduler (700);

allocate, to each of the type one network scheduler (600) and the type two network scheduler (700), the at least one PRB based on the DSS policy configuration message; and

dynamically update the DSS policy configuration message based on the computed bandwidth demand at a predetermined time duration.

20. The first controller (300) of any one of clauses 17 to 19, wherein at least one of: the one or more traffic buffer demand is a one or more physical resource block (PRB) buffer demand, the first controller (300) is a near real-time radio access network intelligent controller, the second controller (200) is a non-real-time radio access network intelligent controller, the first time interval is a first transmission time interval intervals (TTIs) for the one or more traffic arrival information, the second time interval is a second transmission time intervals (TTIs) for the one or more traffic arrival information, the type one network scheduler (600) is a 4G scheduler, the type two network scheduler (700) is a 5G scheduler, the plurality of traffic arrival information is a plurality of PRB parameters in units of physical resource block (PRB) per transmission time intervals (TTIs).

21. The first controller (300) of any one of clauses 17 to 20, wherein the second time interval is an immediate next time interval of the first-time interval.

22. The first controller (300) of any one of clauses 17 to 21, wherein the one or more average deficit value for the first time interval, from each of the type one network scheduler (600) and the type two network scheduler (700), is determined by determined by at least one of:

subtracting at least one used PRBs from at least one allocated physical resource block (PRB) over a predetermined time duration,

subtracting at least one needed PRBs from the at least one allocated physical resource block (PRB) over a predetermined time duration.

23. The first controller (300) of any one of clauses 17 to 22 further configured to:

receive, from the second controller (200), the dynamic spectrum sharing (DSS) policy configuration message for bandwidth allocation proportion to the type one network scheduler (600) and the type two network scheduler (700); and

allocate, to each of the type one network scheduler (600) and the type two network scheduler (700), the at least one PRB based on the DSS policy configuration message,

wherein the one or more average deficit value for the first time interval, from each of the type one network scheduler (600) and the type two network scheduler (700), is determined by determined by at least one of:

subtracting at least one used PRBs from at least one allocated physical resource block (PRB) over a predetermined time duration,

subtracting at least one needed PRBs from the at least one allocated physical resource block (PRB) over a predetermined time duration.

24. The first controller (300) of any one of clauses 17 to 23, wherein the wireless communication system (1000) is an open-radio access network (O-RAN) architecture system, wherein the O-RAN architecture system includes the non-real-time RAN intelligent controller, the near real-time RAN intelligent controller and a plurality of components, wherein the plurality of components is at least one of: disaggregated, reprogrammable and vendor independent, wherein the near real-time RAN intelligent controller comprises vendor independent APIs (Application programming interfaces), wherein the near real-time RAN intelligent controller is the first controller.

25. The first controller (300) of any one of clauses 17 to 23, wherein the at least one physical resource block during the second time interval, assigned to each of the type one network scheduler (600) and the type two network scheduler (700), are orthogonal to each other.

26. The first controller (300) of any one of clauses 17 to 24, wherein the one or more traffic arrival information for the second time interval is a next traffic arrival information, the first time interval is the first transmission time intervals (TTIs) for the one or more traffic arrival information, the second time interval is the next TTIs for the one or more traffic arrival information,
wherein the next traffic arrival information for the next TTIs is estimated by at least one of: a geometric smoothing, a linear regression and a prediction analysis, of the received one or more traffic arrival information in unit of PRB per TTIs.

27. The first controller (300) of any one of clauses 17 to 26, wherein the one or more average deficit value, each for the first time interval and the second time interval, is at least one of: positive value, zero value and negative value.

28. The first controller (300) of any one of clauses 17 to 27, wherein the next average deficit for the next TTI, from the type one network scheduler (600) and the type two network scheduler (700), is estimated using a regression equation:

$$D_s^*(n) = (1-\alpha)D_s^*(n-1) + \alpha D_s(n),$$

wherein the first time interval is a first transmission time intervals (TTIs) for the one or more traffic arrival information, the second time interval is the next TTIs for the one or more traffic arrival information,
wherein $D_s^*(n)$ is the next deficit for next TTIs,
wherein the $D_s(n)$ is the one or more average deficit value, each from the type one network scheduler and the type two network scheduler, in units of physical resource block (PRB) per TTIs;

wherein $\alpha$ is the parameter for smoothing, wherein value of $\alpha$ lies in a range of 0 to 1, wherein $D_s^*(0) = D_s(0)$.

29. The first controller (300) of any one of clauses 17 to 28, wherein the first time interval is the first one or more transmission time intervals (TTIs) for the one or more traffic arrival information, the second time interval is the next TTIs for the one or more traffic arrival information,
wherein the next average deficit for the next TTIs is estimated by at least one of: the geometric smoothing, the linear regression and the prediction analysis, of the received one or more average deficit value, each from the type one network scheduler (600) and the type two network scheduler (700).

30. The first controller (300) of any one of clauses 17 to 29, wherein the forecast allocation based on the one or more traffic buffer demand, the one or more average deficit value of PRB per TTIs, and the estimated next average deficit for the next TTIs for each of the type one network scheduler (600) and the type two network scheduler (700) is computed by:

$$X_s(n) = Max\{ R_s(n) + D_s(n), R_s^*(n) \},$$

where

$$R_s^*(n) = \beta R_s^*(n-1) + (1-\beta)R_s(n), R_s^*(0) = R_s(0)$$

wherein the one or more traffic buffer demand is the one or more physical resource block (PRB) buffer demand, the first controller (300) is the near real-time RAN intelligent controller, wherein the first time interval is the first one or more transmission time intervals (TTIs) for the one or more traffic arrival information, the second time interval is the next TTIs for the one or more traffic arrival information, the type one network scheduler (600) is the 4G scheduler, the type two network scheduler (700) is the 5G scheduler, the plurality of traffic arrival information is the plurality of PRB parameters in units of physical resource block (PRB) per transmission time intervals (TTIs).
wherein $R_s(n)$ is the plurality of PRB parameters,
wherein $D_s(n)$ is the one or more average deficit value of PRB(s) per TTIs,
wherein $\beta$ is a parameter for smoothing.

31. The first controller (300) of any one of clauses 17 to 30, wherein the allocation of the at least one PRB to each of the type one network scheduler (600) and the type two network scheduler (700) is proportional to the computed forecast allocation.

32. The first controller (300) of any one of clauses 17 to 30, wherein the wireless communication system (1000) includes at least one of: the O-RAN architecture system, a fifth generation communication system, an LTE (Long Term Evolution) communication system, a UMTS (Universal Mobile Telecommunications Service) communication system and a GERAN/GSM (GSM EDGE Radio Access Network/ Global System for Mobile Communications) communication system.

**Claims**

1. A method for providing dynamic allocation of radio resources in a wireless communication system (1000), the wireless communication system (1000) comprising a radio access network (RAN) (500), the RAN (500) comprising a plurality of network nodes, the plurality of network nodes comprising at least a type one network scheduler (600) and a type two network scheduler (700), the method comprising:

   receiving, by a first controller (300) from each of the type one network scheduler (600) and the type two network scheduler (700), a plurality of traffic arrival information for a first time interval, wherein the plurality of traffic arrival information includes one or more traffic buffer demand, one or more traffic arrival information for the first time interval and one or more average deficit value for the first time interval;
   estimating, from the type one network scheduler (600) and the type two network scheduler (700), a next average deficit for a second time interval based on the one or more average deficit value for the first time interval;
   computing, for each of the type one network scheduler (600) and the type two network scheduler (700), a forecast allocation based on the one or more traffic buffer demand, the one or more average deficit value for the first time interval and the estimated next average deficit for the second time interval; and
   allocating, to each of the type one network scheduler (600) and the type two network scheduler (700), at least one physical resource block (PRB) based on the computed forecast allocation.

2. The method as claimed in claim 1, further comprising:

   receiving, by the first controller (300) from a second controller (200), a dynamic spectrum sharing (DSS) policy configuration message for bandwidth allocation proportion to the type one network scheduler (600) and the type two network scheduler (700); and
   allocating, to each of the type one network scheduler (600) and the type two network scheduler (700), the at least one PRB based on the DSS policy configuration message.

3. The method as claimed in claim 1, further comprising:

   receiving, by the first controller (300) from the second controller (200), the dynamic spectrum sharing (DSS) policy configuration message for bandwidth allocation proportion to the type one network scheduler (600) and the type two network scheduler (700);
   allocating, to each of the type one network scheduler (600) and the type two network scheduler (700), the at least one PRB based on the DSS policy configuration message; and
   dynamically updating the DSS policy configuration message based on the computed bandwidth demand at a predetermined time duration.

4. The method as claimed in any preceding claim, wherein at least one of:
   the one or more traffic buffer demand is a one or more physical resource block (PRB) buffer demand, the first controller (300) is a near real-time radio access network intelligent controller, the second controller (200) is a non-real-time radio access network intelligent controller, the first time interval is at least a first one or more transmission time intervals (TTIs) for the one or more traffic arrival information, the second time interval is at least a second one or more transmission time intervals (TTIs), the type one network scheduler (600) is a 4G scheduler, the type two network scheduler (700) is a 5G scheduler, the plurality of traffic arrival information is a plurality of PRB parameters in units of physical resource block (PRB) per transmission time intervals (TTIs).

5. The method as claimed in any preceding claim, wherein the second time interval is an immediate next time interval of the first time interval.

6. The method as claimed in claim 1, wherein the one or more average deficit value for the first time interval, from each of the type one network scheduler (600) and the type two network scheduler (700), is determined by at least one of:

subtracting at least one used PRBs from at least one allocated physical resource block (PRB) over a predetermined time duration,
subtracting at least one needed PRBs from the at least one allocated physical resource block (PRB) over a predetermined time duration.

7. The method as claimed in any preceding claim, further comprising:

receiving, by the first controller (300) from the second controller (200), the dynamic spectrum sharing (DSS) policy configuration message for bandwidth allocation proportion to the type one network scheduler (600) and the type two network scheduler (700); and
allocating, to each of the type one network scheduler (600) and the type two network scheduler (700), the at least one PRB based on the DSS policy configuration message, wherein the one or more average deficit value for the first time interval, from each of the type one network scheduler (600) and the type two network scheduler (700), is determined by at least one of:

subtracting at least one used PRBs from at least one allocated physical resource block (PRB) over a predetermined time duration,
subtracting at least one needed PRBs from the at least one allocated physical resource block (PRB) over a predetermined time duration.

8. The method as claimed in any preceding claim, wherein the wireless communication system (1000) is an openradio access network (O-RAN) architecture system, wherein the O-RAN architecture system includes the non-realtime RAN intelligent controller, the near real-time RAN intelligent controller and a plurality of components, wherein the plurality of components is at least one of: disaggregated, reprogrammable and vendor independent,
wherein the near real-time RAN intelligent controller comprises vendor independent APIs (Application programming interfaces),
wherein the near real-time RAN intelligent controller is the first controller.

9. The method as claimed in any preceding claim, wherein the at least one physical resource block during the second time interval, assigned to each of the type one network scheduler (600) and the type two network scheduler (700), are orthogonal to each other.

10. The method as claimed in any preceding claim, wherein the one or more traffic arrival information for the second time interval is a next traffic arrival information, the first time interval is the first one or more transmission time intervals(TTIs) for the one or more traffic arrival information, the second time interval is the next TTIs,
wherein the next traffic arrival information for the next TTIs is estimated by at least one of: a geometric smoothing, a linear regression and a prediction analysis, of the received one or more traffic arrival information in unit of PRB per TTIs.

11. The method as claimed in any preceding claim, wherein the one or more average deficit value, each for the first time interval and the second time interval, is at least one of: positive value, zero value and negative value.

12. The method as claimed in any preceding claim, further comprising:
estimating the next average deficit for the second time interval, from the type one network scheduler (600) and the type two network scheduler (700), using a regression equation:

$$D_s^*(n) = (1\text{-}\alpha)D_s^*(n - 1) + \alpha D_s(n),$$

wherein the first time interval is at least a first one or more transmission time intervals (TTIs) for the one or more traffic arrival information, the second time interval is at least a second one or more transmission time intervals (TTIs), wherein the second one or more TTIs are the next TTIs for the one or more traffic arrival information,
wherein $D_s^*(n)$ is the next deficit for secondtime interval,
wherein the $D_s(n)$ is the one or more average deficit value, each from the type one network scheduler and the type two network scheduler, in units of physical resource block (PRB) per TTIs;

wherein $\alpha$ is the parameter for smoothing, wherein value of $\alpha$ lies in a range of 0 to 1, wherein $D_s^*(0) = D_s(0)$.

13. The method as claimed in any preceding claim, wherein the first time interval is at least a first one or more transmission time intervals(TTIs) for the one or more traffic arrival information, the second time interval is at least a second one or more transmission time intervals (TTIs), wherein the second one or more TTIs are the next TTIs for the one or more traffic arrival information,

wherein the next average deficit for the next TTIs is estimated by at least one of: the geometric smoothing, the linear regression and the prediction analysis, of the received one or more average deficit value, each from the type one network scheduler (600) and the type two network scheduler (700).

14. The method as claimed in any preceding claim, further comprising:

computing, for each of the type one network scheduler (600) and the type two network scheduler (700), the forecast allocation based on the one or more traffic buffer demand per TTIs, the one or more average deficit value of PRB per TTIs, and the estimated next average deficit for the next TTIs by:

$$X_s(n) = \text{Max}\{R_s(n) + D_s(n), R_S^*(n)\},$$

where

$$R_S^*(n) = \beta R_S^*(n-1) + (1-\beta)R_s(n), \quad R_S^*(0) = R_s(0)$$

wherein the one or more traffic buffer demand is the one or more physical resource block (PRB) buffer demand, the first controller (300) is the near real-time RAN intelligent controller, wherein the first time interval is the first transmission time intervals (TTIs) for the one or more traffic arrival information, the second time interval is the next TTIs for the one or more traffic arrival information, the type one network scheduler (600) is the 4G scheduler, the type two network scheduler (700) is the 5G scheduler, the plurality of traffic arrival information is the plurality of PRB parameters in units of physical resource block (PRB) per transmission time intervals (TTIs).
wherein $R_s(n)$ is the plurality of PRB parameters,
wherein $D_s(n)$ is the one or more average deficit value of PRB(s) per TTIs,
wherein $\beta$ is a parameter for smoothing.

15. A first controller (300) for providing dynamic allocation of radio resources in a wireless communication system (1000), the wireless communication system (1000) comprising a radio access network (RAN) (500), the RAN (500) comprising a plurality of network nodes, the plurality of network nodes comprising at least a type one network scheduler (600) and a type two network scheduler (700), the first controller (300) is configured to:

receive, from each of the type one network scheduler (600) and the type two network scheduler (700), a plurality of traffic arrival information for a first time interval, wherein the plurality of traffic arrival information includes one or more traffic buffer demand, one or more traffic arrival information for the first time interval and one or more average deficit value for the first time interval;
estimate, from the type one network scheduler (600) and the type two network scheduler (700), a next average deficit for a second time interval based on the one or more average deficit value for the first time interval;
compute, for each of the type one network scheduler (600) and the type two network scheduler (700), a forecast allocation based on the one or more traffic buffer demand, the one or more average deficit value for the first time interval and the estimated next average deficit for the second time interval; and
allocate, to each of the type one network scheduler (600) and the type two network scheduler (700), at least one physical resource block (PRB) based on the computed forecast allocation.

FIG. 1

FIG. 2

Near-RT-RIC <u>300</u>

Resource configuration unit
<u>310</u>

AI/ML unit <u>320</u>

Communication unit <u>330</u>

Processor <u>340</u>

FIG. 3

S400

Receive a plurality of traffic arrival information for a first time interval from plurality of network schedulers ⟋ S402

Estimate a next average deficit for a second time interval based on the one or more average deficit value for the first time interval from the plurality of network schedulers ⟋ S404

Compute a forecast allocation based on the one or more traffic buffer demand, the one or more average deficit value for the first time interval and the estimated next average deficit for the second time interval for the plurality of network schedulers ⟋ S406

Allocate at least one physical resource block (PRB) based on the computed forecast allocation to plurality of network schedulers ⟋ S408

FIG. 4

Europäisches
Patentamt

European
Patent Office

Office européen
des brevets

# EUROPEAN SEARCH REPORT

Application Number

EP 21 15 3889

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2014/073335 A1 (PANCHAL JIGNESH S [US]) 13 March 2014 (2014-03-13) <br> * figures 7, 8, 10 * <br> * paragraph [0017] - paragraph [0018] * <br> * paragraph [0041] * <br> * paragraph [0058] - paragraph [0059] * <br> * paragraph [0146] - paragraph [0148] * <br> ----- | 1-15 | INV. <br> H04W72/04 <br> H04W72/12 <br> H04W24/02 |
| A | "Multi-access Edge Computing (MEC) MEC 5G Integration", <br> ETSI DRAFT SPECIFICATION; MEC 031, <br> EUROPEAN TELECOMMUNICATIONS STANDARDS INSTITUTE (ETSI), 650, ROUTE DES LUCIOLES ; F-06921 SOPHIA-ANTIPOLIS ; FRANCE <br> , <br> vol. ISG MEC Multi-access Edge Computing, no. V2.0.5 <br> 18 June 2019 (2019-06-18), pages 1-32, <br> XP014347041, <br> Retrieved from the Internet: <br> URL:docbox.etsi.org/ISG/MEC/70-Draft/0031/ MEC-00315GIntegrationv205/GR MEC-0031v205_cm.docx <br> [retrieved on 2019-06-18] <br> * paragraph [6.5.2] * <br> ----- | 1-15 | |
| A | EP 3 163 930 A1 (CHINA ACADEMY TELECOMMUNICATIONS TECHNOLOGY [CN]) 3 May 2017 (2017-05-03) <br> * paragraph [0014] - paragraph [0018] * <br> * figure 11 * <br> ----- | 1-15 | TECHNICAL FIELDS SEARCHED (IPC) <br><br> H04W |

The present search report has been drawn up for all claims

| Place of search | Date of completion of the search | Examiner |
|---|---|---|
| Munich | 28 May 2021 | del Sorbo, Filomena |

## ANNEX TO THE EUROPEAN SEARCH REPORT
## ON EUROPEAN PATENT APPLICATION NO.

EP 21 15 3889

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2021

| Patent document cited in search report | | Publication date | Patent family member(s) | | Publication date |
|---|---|---|---|---|---|
| US 2014073335 | A1 | 13-03-2014 | NONE | | |
| EP 3163930 | A1 | 03-05-2017 | CN | 104066092 A | 24-09-2014 |
| | | | EP | 3163930 A1 | 03-05-2017 |
| | | | US | 2017135106 A1 | 11-05-2017 |
| | | | WO | 2015196980 A1 | 30-12-2015 |

EPO FORM P0459

For more details about this annex : see Official Journal of the European Patent Office, No. 12/82